# FASCICULE DE BREVET EUROPEEN

(11) **EP 4 260 442 B1**
(45) Date de publication et mention de la délivrance du brevet: **01.07.2026**
(21) Numéro de dépôt: 21787442.9
(22) Date de dépôt: 06.10.2021
(51) Int. Cl.: H02K 5/10, H02K 5/22, H02K 11/33, H02K 21/22

(54) **MOTEUR ELECTRIQUE SANS BALAI DESTINE A METTRE EN ROTATION UNE HELICE D'UN GROUPE MOTO-VENTILATEUR D'UN VEHICULE**
BÜRSTENLOSER ELEKTROMOTOR ZUM DREHEN EINES LÜFTERS EINER MOTORBETRIEBENEN BELÜFTUNGSEINHEIT EINES FAHRZEUGS
BRUSHLESS ELECTRIC MOTOR FOR ROTATING A FAN OF A MOTOR-DRIVEN VENTILATION UNIT OF A VEHICLE

(30) Priorité: 11.12.2020 FR 2013036
(43) Date de publication de la demande: 18.10.2023
(73) Titulaire: Valeo Electrification, 95892 Cergy Pontoise (FR)
(72) Inventeur: BONNEAU, David, 78322 Le Mesnil-Saint-Denis CEDEX (FR); CAMBRONNE, Olivier, 94000 Créteil (FR); VIGOR, Dorian, 78322 Le Mesnil-Saint-Denis CEDEX (FR)
(74) Mandataire: Valeo Powertrain Systems
(86) Numéro de dépôt international: PCT/EP2021/077605
(87) Numéro de publication internationale: WO 2022/122214

(56) Documents cités:
- FR-A1- 3 083 035
- US-A1- 2020 235 631
- US-B1- 7 015 605
- US-B2- 10 720 810

## Description

La présente invention se rapporte au domaine des modules de traitement thermique de véhicule. Plus particulièrement, l'invention a trait aux moteurs électriques sans balais et aux groupes moto-ventilateur de module de traitement thermique équipés de ces moteurs électriques sans balais.

Un moteur électrique sans balais pour groupe moto-ventilateur comprend généralement un rotor et un stator surmontant un boitier électronique. Le stator comprend un bobinage polyphasé par exemple réalisé à partir de bobines individuelles dont chacune est enroulée autour d'une dent que le stator comporte. Le boitier électronique loge un circuit de puissance configuré pour réaliser une alimentation électrique polyphasée des bobines du stator à partir d'un courant électrique fourni par le véhicule. Par exemple le courant électrique peut être issu d'un dispositif de stockage d'énergie électrique du véhicule. Le courant électrique nécessaire pour réaliser l'alimentation polyphasée des bobines du stator est acheminé par un ensemble de conduction. L'ensemble de conduction est électriquement connecté, d'une part, au circuit de puissance, et, d'autre part, au dispositif de stockage d'énergie électrique du véhicule.

Le boitier électronique logeant le circuit de puissance est configuré pour empêcher le circuit de puissance d'être exposé à l'eau ou à l'humidité. Les connexions électriques entre le circuit de puissance et l'ensemble de conduction sont réalisées par soudure à l'extérieur du boitier électronique. Afin de protéger les connexions électriques de l'eau et l'humidité, deux couches de matière synthétique sont moulées successivement sur et autour des connexions électriques.

Cependant, le moulage de matière synthétique sur et autour des soudure des connexions électriques peut imposer des efforts mécaniques sur les soudures qui sont à l'origine de déformations et de pertes d'étanchéité. De plus le procédé d'assemblage des différentes pièces du moteur électrique sans balais tout en garantissant l'étanchéité du moteur est long et complexe.

Le document US 7 015 605 B1 divulgue un moteur comportant un circuit de puissance.

La présente invention a pour but de palier au moins un des inconvénients précités et de conduire en outre à d'autres avantages en proposant un nouveau moteur électrique sans balais destiné à mettre en rotation une hélice d'un groupe moto-ventilateur d'un module de traitement thermique d'un véhicule.

L'invention a aussi pour but de réaliser une connexion électrique simple et performante entre le circuit de puissance et le dispositif de conduction par lequel ce circuit de puissance est alimenté en courant depuis le véhicule, tout en améliorant l'étanchéité des solutions existantes.

La présente invention propose un moteur électrique sans balais selon la revendication 1 destiné à mettre en rotation une hélice d'un groupe moto-ventilateur notamment constitutif d'un module de traitement thermique d'un véhicule. Le moteur électrique sans balais selon l'invention comprend au moins un dispositif de conduction électrique, un rotor, un stator équipé d'au moins deux bobines et un boîtier logeant un circuit d'asservissement et un circuit de puissance, le dispositif de conduction électrique étant configuré pour acheminer un courant électrique au circuit de puissance à partir d'une alimentation électrique du véhicule, le circuit de puissance étant configuré pour relier électriquement le dispositif de conduction électrique aux bobines, la liaison électrique étant placée sous la dépendance du circuit d'asservissement. Au moins une partie du boîtier est interposée entre au moins une portion du circuit de puissance et un connecteur placé à une extrémité du dispositif de conduction électrique.

Ainsi, la partie du boîtier est prise en sandwich entre la première portion du circuit de puissance et le connecteur. Il en résulte, notamment, un positionnement relatif stable et reproductible de ces éléments entre eux.

Selon l'invention, la portion du circuit de puissance, le connecteur et la partie de boîtier interposée entre la portion du circuit de puissance et le connecteur forment un empilement.

Selon l'invention, l'empilement comprend un conduit traversant qui s'étend depuis une première ouverture ménagée dans la première portion du circuit de puissance jusqu'à une deuxième ouverture ménagée dans le connecteur.

Selon un mode de réalisation, au moins une connexion électrique entre le dispositif de conduction électrique et le circuit de puissance est disposée dans le conduit traversant. Selon un mode de réalisation, la connexion électrique est une soudure entre au moins un câble électrique du dispositif de conduction électrique et au moins une piste électriquement conductrice du circuit de puissance.

Selon un mode de réalisation, le conduit traversant est rempli, préférentiellement entièrement, d'au moins un élément d'étanchéité.

Selon un mode de réalisation, la connexion électrique est noyée dans l'élément d'étanchéité. Ceci permet de renforcer l'étanchéité de la connexion électrique entre le dispositif de conduction électrique et le circuit de puissance et, ainsi, de renforcer la protection du circuit de puissance au regard d'éventuelles traces d'humidité.

Selon un mode de réalisation, l'élément d'étanchéité est composé d'au moins un matériau polymère.

Selon un mode de réalisation, le matériau polymère est choisi parmi le groupe comprenant un polysiloxane, un polyuréthane et leur mélange.

Selon un mode de réalisation, l'élément d'étanchéité présente un module de Young inférieur ou égal à 3GPa.

Selon un mode de réalisation, la première ouverture est au moins en partie, préférentiellement totalement, fermée par un capot. Ceci permet, notamment, de protéger l'élément d'étanchéité et/ou renforcer la protection du circuit de puissance par rapport à l'humidité et à l'eau au voisinage de cette première ouverture.

Selon un mode de réalisation, le capot comprend au moins un élément de compartimentation du conduit traversant de manière à isoler une pluralité de connexions électriques les unes des autres, les connexions électriques étant celles réalisées entre le dispositif de conduction électrique et le circuit de puissance.

Selon un mode de réalisation, l'élément de compartimentation est un muret qui s'étend depuis une face du capot et en direction de la deuxième ouverture du conduit traversant.

Selon un mode de réalisation, le capot est fixé au connecteur par au moins un élément de fixation.

Selon un mode de réalisation, l'élément de fixation traverse le circuit de puissance et/ou le boitier.

Selon un mode de réalisation, l'élément de fixation est une vis ou un rivet.

Selon un mode de réalisation, le rivet est venu de matière avec le capot.

Selon un mode de réalisation, la deuxième ouverture est fermée par un couvercle qui couvre au moins en partie, préférentiellement en totalité, le connecteur. Ceci permet de réaliser une protection du connecteur dans la région de la deuxième ouverture et, ainsi, de renforcer la protection du circuit de puissance par rapport à l'humidité et à l'eau au voisinage de cette deuxième ouverture.

Selon un mode de réalisation, le couvercle comprend au moins un élément d'attache au connecteur.

Selon un mode de réalisation, l'élément d'attache coopère avec au moins un élément de maintien du connecteur.

Selon un mode de réalisation, l'élément d'attache est un clip et l'élément de maintien est un ergot.

Selon un mode de réalisation, le circuit de puissance comprend au moins un élément de centrage entre le circuit de puissance et le boitier.

Selon un mode de réalisation, l'élément de centrage est un élément de centrage entre le circuit de puissance et le connecteur. L'élément de centrage permet un centrage des composants de l'empilement entre eux.

Selon un mode de réalisation, le circuit de puissance comprend un support porteur d'au moins une piste électriquement conductrice et d'au moins un onduleur. L'onduleur est configuré pour transformer le courant continu fourni par l'alimentation électrique du véhicule en un courant électrique alternatif de manière à générer un champ magnétique tournant dans le stator et donc pour faire tourner le rotor.

Selon un mode de réalisation, la piste électriquement conductrice présente une forme de barreau à section rectangulaire.

Selon un mode de réalisation, la piste électriquement conductrice présente une section supérieure ou égale à 4 mm² vue dans un plan perpendiculaire à une direction générale d'extension de la piste électriquement conductrice.

Selon un mode de réalisation, le boitier est un dissipateur thermique configuré pour dissiper dans l'environnement extérieur du boitier des calories générées par le circuit d'asservissement et/ou le circuit de puissance.

Selon un mode de réalisation, le boitier est composé d'au moins un matériau conducteur de chaleur choisi parmi le groupe comprenant le cuivre, l'aluminium, un polymère thermiquement conducteur et leur mélange. Le boitier agit aussi comme protection contre les champs électromagnétiques.

Selon un mode de réalisation, le dispositif de conduction électrique comprend au moins un faisceau de câbles électriques.

Il faut entendre ici, ainsi que dans tout ce qui suit, par « câble électrique », qu'un ou plusieurs élément(s) électriquement conducteur(s) entouré(s) par au moins une couche électriquement isolante.

Selon un mode de réalisation, le faisceau de câbles électriques comprend deux câbles configurés pour acheminer le courant électrique de l'alimentation électrique du véhicule au circuit de puissance et deux câbles d'asservissement pour relier le circuit d'asservissement au véhicule et dont la fonction est de transmettre des signaux depuis le véhicule vers le moteur électrique sans balais et depuis le moteur électrique sans balais vers le véhicule.

Selon un mode de réalisation, le connecteur est réalisé à partir d'un matériau synthétique.

L'invention fournit aussi un groupe moto-ventilateur d'un module de traitement thermique d'un véhicule, comprenant une hélice et au moins un moteur électrique sans balais selon l'invention, le moteur électrique sans balais étant relié à l'hélice par un arbre et étant configuré pour entrainer l'hélice en rotation autour d'un axe de rotation.

L'invention fournit de plus un module de traitement thermique d'un véhicule comportant au moins un groupe moto-ventilateur selon l'invention.

Selon un mode de réalisation, le module de traitement thermique comprenant un échangeur thermique et dans lequel le groupe moto-ventilateur est configuré pour coopérer avec l'échangeur thermique.

L'invention propose en outre un procédé d'assemblage d'un moteur électrique sans balais selon l'invention. Le procédé d'assemblage comprend une étape d'assemblage du circuit de puissance au boîtier, une étape de mise en place du connecteur sur le boitier, une étape de soudure entre le dispositif de conduction électrique et le circuit de puissance, une étape fixation du capot au connecteur à l'aide de l'élément de fixation, une étape de remplissage de la cavité avec l'élément d'étanchéité afin de noyer la connexion électrique entre le dispositif de conduction électrique et le circuit de puissance.

Selon un mode de réalisation, le procédé d'assemblage comprend une étape de fixation du couvercle.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] La figure 1 est une vue schématique en coupe d'un module de traitement thermique comprenant un groupe moto-ventilateur conforme à l'invention.
[fig 2] La figure 2 est une vue schématique en perspective d'un moteur électrique sans balais selon l'invention en configuration assemblé tel que représenté sur la figure 1 ;
[fig 3] La figure 3 est une vue schématique en perspective d'un circuit de puissance du moteur sans balais de la figure 2 ;
[fig 4] La figure 4 est une vue schématique de détail de la connexion entre un dispositif de conduction électrique du moteur électrique sans balais de la figure 2 et le circuit de puissance de la figure 3 ;
[fig 5] La figure 5 est une vue en coupe selon un plan vertical et transversal de la figure 4 ;

Il faut tout d'abord noter que si les figures exposent l'invention de manière détaillée pour sa mise en œuvre, elles peuvent bien entendu servir à mieux définir l'invention le cas échéant. Il est également à noter que, sur l'ensemble des figures, les éléments similaires et/ou remplissant la même fonction sont indiqués par la même numérotation.

Dans la description qui va suivre, une direction d'un axe longitudinal L, une direction d'un axe transversal T, et une direction d'un axe vertical V sont représentées par un trièdre (L, T, V) sur les figures. On définit un plan horizontal comme étant un plan perpendiculaire à l'axe vertical V, un plan longitudinal comme étant un plan perpendiculaire à l'axe transversal T, et un plan transversal comme étant un plan perpendiculaire à l'axe longitudinal L.

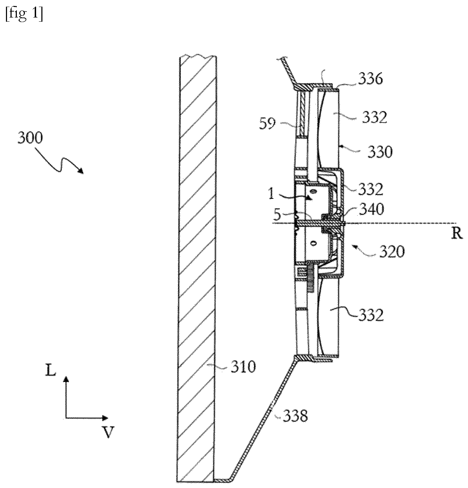

En référence à la figure 1, le module de traitement thermique 300 représenté sur la figure 1 comprend un échangeur thermique 310 qui fait partie du circuit de refroidissement d'un moteur thermique et un groupe moto-ventilateur 320 afin d'assurer une circulation forcée d'un flux d'air F au travers de l'échangeur thermique 310.

L'échangeur thermique 310 comporte, de manière classique, un faisceau de tubes parcourus par un fluide de refroidissement tel qu'une solution aqueuse d'éthylène glycol. Il est traversé par le flux d'air F perpendiculaire au faisceau de tubes. Le moteur du véhicule est refroidi par un échange de chaleur entre le flux d'air qui traverse le faisceau et le fluide du circuit de refroidissement.

Le groupe moto-ventilateur 320 est placé en regard du faisceau du radiateur. Le groupe moto-ventilateur 320 comporte une hélice 330 entraînée en rotation par un moteur électrique sans balais 1. Le moteur électrique sans balais 1 est fixé sur un carénage de maintien 338 raccordé à une périphérie de l'échangeur thermique 310.

L'hélice 330 est constituée de plusieurs pales 332 montées sur un bol 334 et entourées par un carénage circulaire 336 logé lui-même à l'intérieur du carénage de maintien 338. Le bol 334 de l'hélice 330 est rendu solidaire d'un arbre 5 du moteur électrique sans balais 1 sur lequel il est fixé par l'intermédiaire d'un écrou central 340. Le moteur électrique sans balais 1 est reliée au carénage 338 par des oreilles de fixations 59.

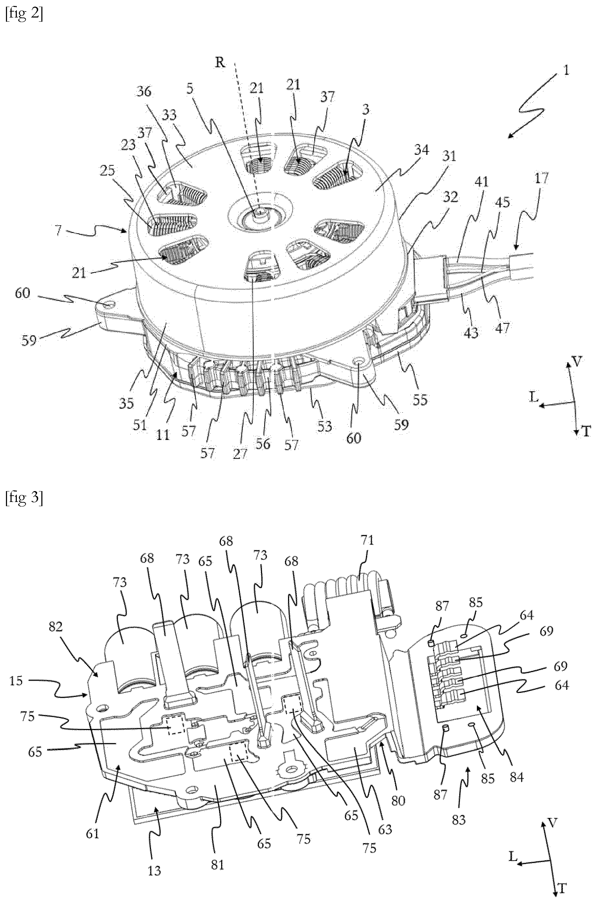

En référence à la figure 1 et à la figure 2, le moteur électrique sans balais 1 comprend un boitier 11, un stator 3 surmontant le boitier 11 et un rotor 7 muni d'un arbre 5 et monté rotatif selon un axe de rotation R. L'axe de rotation R est parallèle à l'axe vertical V tel que défini précédemment. L'axe de rotation R est par exemple parallèle à un axe longitudinal du véhicule lorsque le module thermique 300 est monté sur le véhicule. Le stator 3 est fixe par rapport au boitier 11. Le rotor 7 est libre en rotation par rapport au stator 3.

Dans le mode de réalisation illustré sur la figure 2, le stator 3 est monté fixe sur une face extérieure 52 d'une paroi supérieure 51 du boitier 11. Le stator 3 s'étend dans un plan général d'extension parallèle au plan horizontal précédemment défini. L'arbre 5 s'étend selon un axe d'extension perpendiculaire au plan général d'extension du stator 3. Autrement dit, l'arbre 5 s'étend le long de l'axe vertical V depuis le plan principal d'extension du stator 3 jusqu'au rotor 7.

Le stator 3 comprend une pluralité de bobines 21, par exemple réalisées par enroulement d'un ou plusieurs fils métalliques 23 autour de dents 25 d'une pièce principale 27 du stator 3. Les bobines 21 sont uniformément disposées en cercle autour de l'arbre 5 vu en projection dans le plan horizontal.

Le rotor 7 est monté fixe sur l'arbre 5. L'axe de rotation R du rotor 7 est confondu avec l'axe d'extension de l'arbre 5. Le rotor 7 comprend une cloche 31 de forme cylindrique à base circulaire dont un axe longitudinal est sensiblement confondu avec l'axe de rotation R. La cloche 31 forme une cage de Faraday autour du stator 3. La cloche 31 est ouverte à une première extrémité longitudinale 32 et fermée par une cloison supérieure 34 à une deuxième extrémité longitudinale 33. La cloche 31 est délimitée radialement par une cloison périphérique 35. Un logement 36 est délimité par la cloison périphérique 35 et la cloison supérieure 34. Le logement 36 accueille au moins une partie du stator 3 c'est-à-dire dans l'exemple représenté sur la figure 2, les bobines 21. Autrement dit, la cloison périphérique 35 du rotor 7 entoure les bobines 21 du stator 3.

Comme le montre la figure 2, le rotor 7 comporte une pluralité d'aimants permanents 37. Les aimants permanents 37 sont agencés dans le logement 36. Les aimants permanents 37 sont uniformément répartis sur une face interne de la cloison périphérique 35 vu en projection dans le plan horizontal. Les aimants permanents 37 sont des pôles magnétiques qui tendent à suivre le champ magnétique tournant généré par les bobines 21 du stator 3 et permettent alors de faire tourner le rotor 7.

En référence aux figure 2 à 5, le boitier 11 du moteur électrique sans balais 1 délimite un volume intérieur dans lequel sont logés un circuit d'asservissement 13 et un circuit de puissance 15. Le circuit de puissance 15 logé dans le boitier 11 est configuré pour relier électriquement un dispositif de conduction électrique 17 aux bobines 21 à partir de l'alimentation électrique du véhicule. La liaison électrique entre le circuit de puissance 15 et les bobines 21 est placé sous la dépendance du circuit d'asservissement 13. Au moins une partie du boîtier 11 est interposée entre au moins une portion du circuit de puissance 15 et un connecteur 91 placé à une extrémité du dispositif de conduction électrique 17. Cet agencement ainsi que la connexion électrique entre le circuit de puissance 15 et le dispositif de conduction électrique 17 seront décrits plus en détails ci-après.

Dans le mode de réalisation représenté sur la figure 2, le boitier 11 est fermé et étanche. Le boitier 11 comprend une paroi inférieure 53 reliées à la paroi supérieure 51 par une paroi verticale 55. La paroi supérieure 51, la paroi inférieure 53 et la paroi verticale 55 délimite le volume intérieur. La paroi supérieure 51 et la paroi inférieure 53 s'étendent parallèlement au plan horizontal tel que défini auparavant. La paroi verticale 55 s'étend circonférentiellement depuis un bord de la paroi supérieure 51 vers un bord de la paroi inférieure 53, parallèlement à l'axe vertical V.

Le boitier 11 est composé d'au moins un matériau conducteur de chaleur qui lui permet d'être un dissipateur de chaleur. Cela permet notamment de dissiper les calories produites par le stator 3, le rotor 7, le circuit de puissance 15 et/ou le circuit d'asservissement 13, lorsque le moteur électrique sans balais 1 est en fonctionnement. Le matériau conducteur de chaleur est choisi parmi l'aluminium, le cuivre, un polymère conducteur de chaleur et leur mélange.

Le boitier 11 comprend des ailettes 57. Une première partie des ailettes fait saillie d'une face extérieure 52 de la paroi supérieure 51 et une deuxième partie des ailettes 57 fait saillie d'une face extérieure 56 de la paroi verticale 55. Les ailettes permettent d'améliorer les échanges thermiques entre le boitier 11 et l'air extérieur au boitier 11. Les ailettes de la première partie des ailettes 57 sont venues de matières avec la paroi supérieure 51 du boitier 11. Les ailettes de la deuxième partie des ailettes 57 sont venues de matière avec la paroi verticale 55 du boitier 11.

Le ou les matériaux composant le boitier 11 sont aussi suffisamment conducteur d'électricité pour absorber au moins en partie les champs électromagnétiques émis par le circuit de puissance 15 et/ou le circuit d'asservissement 13. Les composants électroniques du véhicule sont ainsi protégés des champs électromagnétiques générés par le circuit de puissance 15 et/ou le circuit d'asservissement 13.

En référence à la figure 2, l'alimentation électrique du véhicule est acheminée jusqu'au circuit de puissance 15 par le dispositif de conduction électrique 17. Le dispositif de conduction électrique 17 comprend un faisceau de câbles électriques 41, 43, 45, 47 comportant au moins deux câbles d'alimentation 41, 43 configurés pour acheminer le courant électrique de l'alimentation électrique du véhicule au circuit de puissance 15, et deux câbles d'asservissement 45, 47 pour relier le circuit d'asservissement 13 au véhicule. Les deux câbles d'asservissement 45, 47 ont pour fonction de transmettre des signaux depuis le véhicule vers le moteur électrique sans balais 1 et/ou depuis le moteur électrique sans balais 1 vers le véhicule. Les signaux transmis peuvent par exemple concerner la mise en fonctionnement (marche/arrêt) du moteur électrique sans balais 1 et/ou une consigne de fonctionnement du moteur électrique sans balais 1 et/ou un diagnostic de l'état du moteur électrique sans balais 1.

Il faut entendre ici, ainsi que dans tout ce qui suit, par « câble électrique », qu'un ou plusieurs élément(s) électriquement conducteur(s) entouré(s) par au moins une couche électriquement isolante.

En référence aux figures 2 à 5, le dispositif de conduction électrique 17 comprend un connecteur 91 agencé à une extrémité du faisceau de câbles électriques c'est-à-dire à une extrémité du dispositif de conduction électrique 17. Les câbles électriques 41, 43, 45, 47 présentent chacun au moins une extrémité qui est reçue dans le connecteur 91 pour être raccordée au circuit de puissance 15 et au circuit d'asservissement 13. Le connecteur 91 est réalisé dans un matériau synthétique, par exemple par injection d'une résine polymérisable dans un moule.

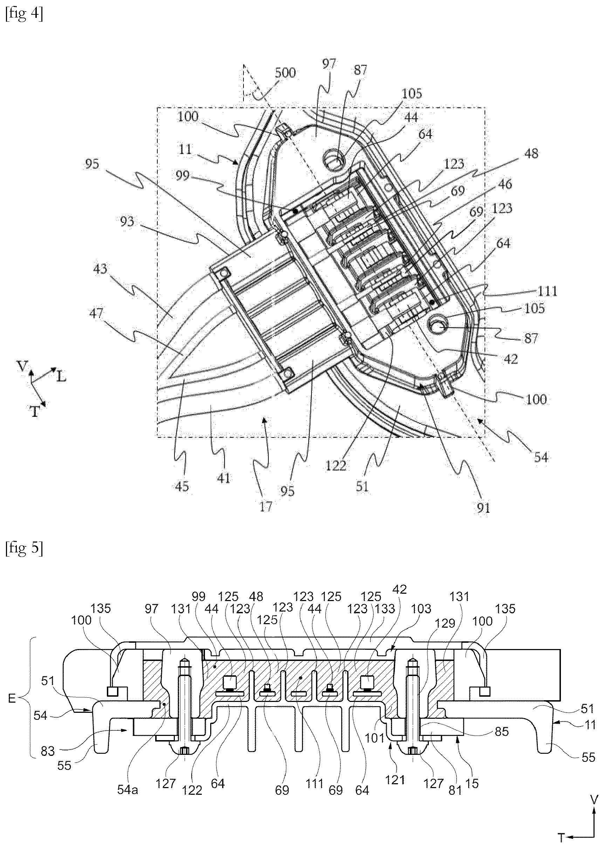

La figure 4 illustre plus précisément la région de connexion électrique des câbles électriques 41, 43, 45, 47 du dispositif de conduction électrique 17 aux circuit de puissance 15 et circuit d'asservissement 15, reçus dans le boîtier 11. Par soucis de clarté de la figure, un élément d'étanchéité 131 a été omis.

La figure 5 est une vue en coupe de la figure 4 selon le plan de coupe 500. Dans cette figure, un élément d'étanchéité 131 est présent et n'a donc pas été omis.

En référence à la figure 4 et à la figure 5, le connecteur 91 comporte un corps 97 et un élément de guidage 93 des extrémités des câbles électriques 41, 43, 45, 47 vers le boîtier 11. L'élément de guidage 93 est attenant au corps 97. Plus précisément, l'élément de guidage 93 du connecteur 91 comprend plusieurs tubes 95 configurés pour recevoir chacun une extrémité d'un câble électrique 41, 43, 45, 47 tout en assurant une isolation électrique des extrémités des autres câbles électriques 41, 43, 45, 47.

Comme le montrent la figure 4 et la figure 5, le corps 97 du connecteur 91 comporte un passage traversant 99 depuis un premier orifice 101 à un deuxième orifice 103. Le passage traversant 99 s'étend selon une direction parallèle à l'axe vertical V précédemment défini.

Le passage traversant 99 accueillent les extrémités conductrices 42, 44, 46, 48 des câbles électriques 41, 43, 45, 47 guidées par les tubes 95 précédemment décrits. Il faut comprendre ici que l'on entend par "extrémité conductrice" 42, 44, 46, 48 une extrémité dénudée d'un câble électrique 41, 43, 45, 47 c'est-à-dire l'extrémité de l'élément électriquement conducteur dudit câble, débarrassée de sa couche électriquement isolante.

En référence à la figure 3, le circuit de puissance 15 s'étend dans un plan général d'extension perpendiculaire à l'axe de rotation R du rotor 7 avec une première face 80, et une deuxième face 82, opposée à la première face 80. Le circuit d'asservissement 13 est fixé sur la première face 80 du circuit de puissance 15. Le circuit de puissance 15 est fixé au boitier 11 sur une face intérieure 50 de la paroi supérieure 51 du boitier 11. Ainsi, la deuxième face 82 du circuit de puissance 15 est en regard de la face intérieure 50 de la paroi supérieure 51 du boitier 11. En d'autres termes, le circuit de puissance 15 est intercalé entre le circuit d'asservissement 13 et la paroi supérieure 51 du boitier 11, le long de l'axe de rotation R.

Le circuit de puissance 15 comprend au moins une piste électriquement conductrice 61 et au moins un support 81 de la piste électriquement conductrice 61.

La piste électriquement conductrice 61 comprend au moins un premier segment 63 et au moins un deuxième segment 67 reliée électriquement au premier segment 63 par une pluralité de segments intermédiaires 65. Les segments 63, 65, 67 de la piste électriquement conductrice 61 présentent chacun une forme de barreau à section rectangulaire vue en projection dans un plan perpendiculaire à une direction principale de conduction du courant. Chaque segment 63, 65, 67 de la piste électriquement conductrice 61 présente une section supérieure ou égale à 4 mm² vue en projection dans un plan perpendiculaire à la direction principale de conduction du courant électrique.

En référence aux figure 3 à 5, la piste électriquement conductrice 61 comprend deux premiers segments 63 comportant chacun un élément de connexion électrique 64 soudé directement aux extrémités conductrices 42, 44, 46 ,48 des câbles d'alimentation 41, 43 du dispositif de conduction électrique 17.

Chaque élément de connexion électrique 64 de chaque premier segment 63 présente un profil en forme de S vu en projection dans le plan longitudinal tel que défini précédemment. Les éléments de connexion électrique 64 traversent une fenêtre 84 située dans une portion 83 du support 81 selon une direction allant de la première face 80 à la deuxième face 82. Les éléments de connexion électrique 64 émergent de la fenêtre 84.

En configuration assemblé du moteur électrique sans balais 1, les éléments de connexion électrique 64 traversent une découpe 54a de la paroi supérieure 51 du boitier 11. La découpe 54a de la paroi supérieur 51 est agencée dans une partie 54 du boitier 11. Les éléments de connexion électrique 64 reçus dans le passage traversant 99 du connecteur 91. Pour réaliser la connexion électrique entre les câbles d'alimentation 41, 43 et le circuit de puissance 15, chaque extrémité conductrice 42, 44 est reliée par soudure à un élément de connexion électrique 64 du circuit de puissance 15.

Le circuit de puissance 15 comprend une pluralité de composants électriques 71, 73, 75. La pluralité de composants électriques 71, 73, 75 comprend au moins une auto-inductance 71, au moins un condensateur 73, et au moins un onduleur 75 (en pointillé). La pluralité de composants électriques 71, 73, 75 est portée par la piste électriquement conductrice 61.

Les onduleurs 75 sont agencés sur la première face 80 du circuit de puissance 15. Les onduleurs 75 sont configurés pour transformer le courant continu fourni par l'alimentation électrique du véhicule en un courant électrique alternatif de manière à générer un champ magnétique tournant dans le stator 3 et donc pour faire tourner le rotor 7. L'onduleur 75 comprend au moins un transistor, préférentiellement un transistor à effet de champ à grille isolée aussi appelé MOSFET, acronyme anglais de Metal Oxide Semiconductor Field Effect Transistor.

La piste électriquement conductrice 61 comprend trois deuxième segments 67 qui comportent chacun une lame de connexion électrique 68 soudée directement à une lame de connexion électrique (non représentée) du stator 3.

En référence aux figures 3 à 5, le circuit d'asservissement 13 comprend des organes de connexion électrique 69 destinés à être soudés aux extrémités conductrice 46, 48 des câbles d'asservissement 45, 47 du dispositif de conduction électrique 17. Autrement dit, les organes de connexion électrique 69 du circuit d'asservissement 13 permettent de relier les câbles d'asservissement 45, 47 au circuit d'asservissement 13. Les organes de connexion électrique 69 traversent la fenêtre 84 du support 81 selon une direction allant de la première face 80 à la deuxième face 82 du support 81. Les organes de connexion électrique 69 émergent de la fenêtre 84.

En configuration assemblé du moteur électrique sans balais 1, les organes de connexion électrique 69 traversent la découpe 54a de la paroi supérieure 51 du boitier 11 et sont reçus dans le passage traversant 99 du connecteur 91. Pour réaliser la connexion électrique entre les câbles d'asservissement 45, 47 et le circuit d'asservissement 13, chaque extrémité conductrice 46, 48 est reliée par soudure à un organe de connexion électrique 69 du circuit d'asservissement 13.

La portion 83 du circuit de puissance 15 comprend au moins un élément de centrage 87 qui permet de centrer le circuit de puissance 15 et le corps 97 du connecteur 91. Dans le mode de réalisation représenté sur la figure 4, la portion 83 du circuit de puissance 15 comprend deux éléments de centrage 87 répartis de part et d'autre de la fenêtre 84 et alignés le long de l'axe transversal T. Les éléments de centrage 87 présentent la forme d'un plot qui s'étendent depuis la deuxième face 82 du support 81 en direction du connecteur 91 le long de l'axe vertical V. Chaque élément de centrage 87 s'étend au travers de la découpe 54a de la paroi supérieure 51 du boitier 11. Chaque élément de centrage 87 coopèrent avec un trou de centrage 105 pratiqué dans le corps 97 du connecteur 91. L'élément de centrage 87 permet un centrage des composants entre eux. Selon un mode de réalisation non représenté, le circuit de puissance 15 comprend au moins un élément de centrage entre le circuit de puissance 15 et le boitier 11.

En référence aux figure 4 et 5, en configuration assemblé du moteur électrique sans balais 1, la portion 83 du circuit de puissance 15 comprenant la fenêtre 84, la partie 54 du boitier 11 comprenant la découpe 54a et le connecteur 91 du dispositif de conduction électrique 17 sont empilés les uns sur les autres selon une direction parallèle à l'axe vertical V. Plus précisément, la partie 54 du boitier 11 est interposée entre la portion 83 du circuit de puissance 15 et le connecteur 91. La portion 83 du circuit de puissance 15 comprenant la fenêtre 84, la partie 54 du boitier 11 comprenant la découpe 54a et le connecteur 91 du dispositif de conduction électrique 17 forment donc un empilement E.

Dans cette configuration, la fenêtre 84, la découpe 54a et le passage traversant 99 du connecteur 91 sont en regard les uns des autres. Ils forment ainsi un conduit traversant 111 qui s'étend depuis une première ouverture correspondant à la fenêtre 84 du circuit de puissance 15 jusqu'à une deuxième ouverture correspondant au deuxième orifice 103 ménagée dans le connecteur 91.

Ainsi dans la suite de la description, les termes « fenêtre » et « première ouverture » seront utilisés indifféremment avec la même référence qui est 84. Il en sera de même avec les termes « deuxième orifice » et « deuxième ouverture » qui seront utilisés indifféremment avec la même référence qui est 103.

Comme on peut le voir sur les figures 4 et 5, les connexions électriques, lesquelles sont des soudures, entre les éléments de connexion électrique 64 et les extrémités conductrices 42, 44 des câbles d'alimentation 41,43 sont disposées dans le conduit traversant 111. De manière similaire, les connexions électriques, lesquelles sont des soudures, entre les organes de connexion électrique 69 et les extrémités conductrices 46, 48 des câbles d'alimentation 45, 47 sont agencées dans le conduit traversant 111.

La première ouverture 84 est entièrement fermée par un capot 121 de manière à protéger le conduit traversant 111. Le capot 121 comprend une plaque 122 qui s'étend dans un plan d'extension perpendiculaire à l'axe de rotation R. Le capot 121 comprend des éléments de compartimentation 123 qui s'étendent depuis une face de la plaque 122 vers la deuxième ouverture 103 du conduit traversant 111. Les éléments de compartimentation 123 s'étendant dans le conduit traversant 111. La plaque 122 est venue de matière avec les éléments de compartimentation 123.

Les éléments de compartimentation 123 présentent une forme de muret. Les éléments de compartimentation 123 permettent de créer autant de compartiments 125 qu'il y a de connexions électriques entre le dispositif de conduction électrique 17 et le circuit de puissance 15 et de connexions électriques entre le dispositif de conduction électrique 17 et le circuit d'asservissement 13. Autrement dit, chaque compartiments 125 loge une connexion électrique. Le risque de court-circuit est ainsi réduit entre les connexions électriques adjacentes.

Le capot 121 agencé au niveau de la première ouverture 84, la portion 83 du circuit de puissance 15 comprenant la fenêtre 84, la partie 54 du boitier 11 comprenant la découpe 54a et le connecteur 91 sont maintenus ensemble par au moins un élément de fixation 127.

Dans l'exemple représenté, il y a deux éléments de fixation 127. Les éléments de fixation 127 sont des vis qui traversent la plaque 122 du capot 121. Les éléments de fixation 127 traversent le support 81 du circuit de puissance 15 au niveau d'alésages 85 pratiqués dans la portion 83 du support 81. Les éléments de fixation 127 traversent aussi le boitier 11 pour coopérer chacun avec un taraudage 129 fait dans le connecteur 91. Ainsi le capot 121 est fixé au connecteur 91. Chacun des éléments de fixation 127 traverse le boitier 11 au niveau de la découpe 54a de la paroi supérieure 51 du boitier 11.

Dans un mode de réalisation non représenté, les éléments de fixation 127 sont des rivets venus de matière avec le capot 121. Les rivets traversent alors la plaque 122 du capot 121, le circuit de puissance 15, le boitier 11 et le connecteur 91 afin qu'une extrémité libre des rivets soit bouterollée pour permettre le maintien de tous ces composants ensemble.

En référence à la figure 5, afin de renforcer la protection des connexions électriques réalisées dans le conduit traversant 111, l'invention prévoit que ce dernier soit rempli au moins partiellement d'un élément d'étanchéité 131. Ainsi la partie du conduit traversant comprise entre le capot 121 et la deuxième ouverture 103 est rempli de l'élément d'étanchéité 131. Par conséquent les connexions électriques agencées dans le conduit traversant 111 sont noyées dans l'élément d'étanchéité 131.

L'élément d'étanchéité 131 est composé d'au moins un matériau polymère qui est suffisamment souple pour endurer des déformations mécaniques sans se fissurer et suffisamment étanche pour éviter que l'eau ne pénètre dans le conduit traversant 111. L'élément d'étanchéité 131 présente un module de Young inférieur ou égal à 3GPa. A titre d'exemples non limitatifs, le matériau polymère choisi le matériau polymère est choisi parmi le groupe comprenant un polysiloxane, un polyuréthane et leur mélange.

Dans l'exemple de réalisation illustré sur les figure 2 à 5, afin de protéger complétement le conduit traversant 111, le premier orifice 84 est fermé par un couvercle 133. Le premier orifice 84 est recouvert entièrement par le couvercle 133. Le couvercle 133 est rapporté sur le corps 97 du connecteur 91 au moyen d'au moins un élément d'attache 135. Selon l'exemple plus particulièrement illustré par la figure 2, l'élément d'attache 135 prend la forme d'un crochet configuré pour coopérer par clipsage avec un organe de maintien 100 agencé sur le corps 97. L'organe de maintien 100 est un ergot.

Le procédé d'assemblage du moteur électrique sans balais 1 va maintenant être décrit en référence aux figure 2 à 5.

Le procédé d'assemblage comprend une première étape d'assemblage du circuit de puissance 15 au boîtier 11. Le circuit de puissance 15 est fixé à la face interne de la paroi supérieure 51 du boitier 11 à l'aide de vis. Ensuite le connecteur 91 est mis en place sur la face extérieure de la paroi supérieure 51 du boitier à l'aide des éléments de centrage 87.

Une étape de soudure entre les éléments de connexion électrique 64 et les extrémités électriques 42, 44 des câbles d'alimentation 41, 43 peut être effectuée. Concomitamment, la soudure entre les organes de connexion électrique 69 et les extrémités électriques 46, 48 des câbles d'alimentation 45, 47 peut être opérée.

Les opérations de soudure sont suivies de la mise en place du capot 121 au niveau du premier orifice 84 du conduit traversant 111 et de la fixation du capot 121 à l'aide de l'élément de fixation 127. Ainsi le capot 121, le circuit de puissance 15, le boitier 11 et le connecteur 91 sont rendus solidaires.

La conduit traversant 111 délimité à une extrémité par le capot 121 est alors rempli de l'élément d'étanchéité 131 afin de noyer les connexions électriques entre le dispositif de conduction électrique 17 et le circuit de puissance 15 ainsi que les connexions électriques entre le dispositif de conduction électrique et le circuit d'asservissement 13. Le procédé d'assemblage comprend enfin une étape de fixation du couvercle 133 pour venir recouvrir le deuxième ouverture 103 protégeant ainsi le conduit traversant 111 et l'élément d'étanchéité 131.

La première étape peut être précédée par une étape de fixation du circuit d'asservissement 13 au circuit de puissance 15.

L'invention permet ainsi de réaliser simplement, entre le dispositif de conduction électrique 17 et le circuit de puissance 15 et le circuit d'asservissement 13, une liaison électrique protégée de l'environnement extérieur au moteur électrique sans balais 1. Bien sûr, l'invention n'est pas limitée aux exemples qui viennent d'être décrits et de nombreux aménagements peuvent être apportés à ces exemples sans sortir du cadre de l'invention, défini par les revendications.

## Revendications

1. Moteur électrique sans balais (1) destiné à mettre en rotation une hélice (330) d'un groupe moto-ventilateur (320) d'un véhicule, comprenant au moins un dispositif de conduction électrique (17), un rotor (7), un stator (3) équipé d'au moins deux bobines (21) et un boitier (11) logeant un circuit d'asservissement (13) et un circuit de puissance (15), le dispositif de conduction électrique (17) étant configuré pour acheminer un courant électrique au circuit de puissance (15) à partir d'une alimentation électrique du véhicule, le circuit de puissance (15) étant configuré pour relier électriquement le dispositif de conduction électrique (17) aux bobines (21), la liaison électrique étant placée sous la dépendance du circuit d'asservissement (13), dans lequel au moins une partie du boitier (11) est interposée entre au moins une portion (83) du circuit de puissance (15) et un connecteur (91) placé à une extrémité du dispositif de conduction électrique (17) et le connecteur (91) et la partie du boitier (11) interposée entre la portion (83) du circuit de puissance (15) et le connecteur (91) forment un empilement (E) et dans lequel l'empilement (E) comprend un conduit traversant (111) qui s'étend depuis une première ouverture (84) ménagée dans la première portion (83) du circuit de puissance (15) jusqu'à une deuxième ouverture (103) ménagée dans le connecteur (91).

2. Moteur électrique sans balais (1) selon la revendication précédente, dans lequel au moins une connexion électrique entre le dispositif de conduction électrique (17) et le circuit de puissance (15) est disposée dans le conduit traversant (111).

3. Moteur électrique sans balais (1) selon la revendication précédente, dans lequel la connexion électrique est une soudure entre au moins une extrémité (42, 44, 46, 48) d'au moins un câble électrique (41, 42, 43, 45) du dispositif de conduction électrique (17) et au moins une piste électriquement conductrice (61) du circuit de puissance (15).

4. Moteur électrique sans balais (1) selon l'une quelconque des revendications 1 à 3, dans lequel le conduit traversant (111) est rempli d'au moins un élément d'étanchéité (131).

5. Moteur électrique sans balais (1) selon l'une des revendications 1 à 4, dans lequel la première ouverture (84) est au moins en partie fermée par un capot (121).

6. Moteur électrique sans balais (1) selon la revendication précédente, comprenant plusieurs connexions électriques entre le dispositif de conduction électrique (17) et le circuit de puissance (15), dans lequel le capot (121) comprend au moins un élément de compartimentation (123) du conduit traversant (111) configuré pour isoler une pluralité de connexions électriques les unes des autres.

7. Moteur électrique sans balais (1) selon l'une quelconque des revendications 5 à 6, dans lequel le capot (121) est fixé au connecteur (91) par au moins un élément de fixation (127).

8. Moteur électrique sans balais (1) l'une quelconque des revendications 1 à 7, dans lequel la deuxième ouverture (103) est fermée par un couvercle (133) qui couvre au moins en partie le connecteur (91).

9. Groupe moto-ventilateur (320) d'un module de traitement thermique (300) d'un véhicule, comprenant une hélice (330) et au moins un moteur électrique sans balais (1) selon l'une des revendications précédentes, le moteur électrique sans balais (1) étant relié à l'hélice (330) par un arbre (5) et étant configuré pour entrainer l'hélice (330) en rotation.

## Patentansprüche

1. Bürstenloser Elektromotor (1), der dazu bestimmt ist, einen Propeller (330) einer Motorlüftereinheit (320) eines Fahrzeugs in Drehung zu versetzen, umfassend mindestens eine elektrische Leitungsvorrichtung (17), einen Rotor (7), einen Stator (3), der mit mindestens zwei Spulen (21) ausgestattet ist, und ein Gehäuse (11), das eine Servosteuerschaltung (13) und eine Leistungsschaltung (15) aufnimmt, wobei die elektrische Leitungsvorrichtung (17) dazu konfiguriert ist, einen elektrischen Strom von einer elektrischen Stromversorgung des Fahrzeugs zur Leistungsschaltung (15) zu leiten, wobei die Leistungsschaltung (15) dazu konfiguriert ist, die elektrische Leitungsvorrichtung (17) mit den Spulen (21) elektrisch zu verbinden, wobei die elektrische Verbindung unter der Abhängigkeit der Servosteuerschaltung (13) steht, **dadurch gekennzeichnet, dass** mindestens ein Teil des Gehäuses (11) zwischen mindestens einem Abschnitt (83) der Leistungsschaltung (15) und einem Verbinder (91), der an einem Ende der elektrischen Leitungsvorrichtung (17) angeordnet ist, zwischengeschaltet ist, und der Verbinder (91) und der Teil des Gehäuses (11), der zwischen dem Abschnitt (83) der Leistungsschaltung (15) und dem Verbinder (91) zwischengeschaltet ist, einen Stapel (E) bilden, und wobei der Stapel (E) einen Durchgangskanal (111) umfasst, der sich von einer ersten Öffnung (84), die in dem ersten Abschnitt (83) der Leistungsschaltung (15) ausgebildet ist, bis zu einer zweiten Öffnung (103), die in dem Verbinder (91) ausgebildet ist, erstreckt.

2. Bürstenloser Elektromotor (1) nach dem vorhergehenden Anspruch, wobei mindestens eine elektrische Verbindung zwischen der elektrischen Leitungsvorrichtung (17) und der Leistungsschaltung (15) in dem Durchgangskanal (111) angeordnet ist.

3. Bürstenloser Elektromotor (1) nach dem vorhergehenden Anspruch, wobei die elektrische Verbindung eine Schweißverbindung zwischen mindestens einem Ende (42, 44, 46, 48) mindestens eines elektrischen Kabels (41, 42, 43, 45) der elektrischen Leitungsvorrichtung (17) und mindestens einer elektrisch leitenden Leiterbahn (61) der Leistungsschaltung (15) ist.

4. Bürstenloser Elektromotor (1) nach einem der Ansprüche 1 bis 3, wobei der Durchgangskanal (111) mit mindestens einem Dichtelement (131) gefüllt ist.

5. Bürstenloser Elektromotor (1) nach einem der Ansprüche 1 bis 4, wobei die erste Öffnung (84) zumindest teilweise durch eine Abdeckung (121) verschlossen ist.

6. Bürstenloser Elektromotor (1) nach dem vorhergehenden Anspruch, der mehrere elektrische Verbindungen zwischen der elektrischen Leitungsvorrichtung (17) und der Leistungsschaltung (15) umfasst, wobei die Abdeckung (121) mindestens ein Unterteilungselement (123) des Durchgangskanals (111) umfasst, das dazu konfiguriert ist, eine Vielzahl von elektrischen Verbindungen voneinander zu isolieren.

7. Bürstenloser Elektromotor (1) nach einem der Ansprüche 5 bis 6, wobei die Abdeckung (121) durch mindestens ein Befestigungselement (127) an dem Verbinder (91) befestigt ist.

8. Bürstenloser Elektromotor (1) nach einem der Ansprüche 1 bis 7, wobei die zweite Öffnung (103) durch einen Deckel (133) verschlossen ist, der den Verbinder (91) zumindest teilweise abdeckt.

9. Motorlüftereinheit (320) eines Wärmebehandlungsmoduls (300) eines Fahrzeugs, umfassend einen Propeller (330) und mindestens einen bürstenlosen Elektromotor (1) nach einem der vorhergehenden Ansprüche, wobei der bürstenlose Elektromotor (1) über eine Welle (5) mit dem Propeller (330) verbunden und dazu konfiguriert ist, den Propeller (330) in Drehung anzutreiben.

## Claims

1. A brushless electric motor (1) intended to rotate a propeller (330) of a motor-fan unit (320) of a vehicle, comprising at least one electrical conduction device (17), a rotor (7), a stator (3) equipped with at least two coils (21) and a housing (11) accommodating a servo-control circuit (13) and a power circuit (15), the electrical conduction device (17) being configured to convey an electric current to the power circuit (15) from an electrical power supply of the vehicle, the power circuit (15) being configured to electrically connect the electrical conduction device (17) to the coils (21), the electrical connection being placed under the control of the servo-control circuit (13), wherein at least a part of the housing (11) is interposed between at least a portion (83) of the power circuit (15) and a connector (91) placed at one end of the electrical conduction device (17), and the connector (91) and the part of the housing (11) interposed between the portion (83) of the power circuit (15) and the connector (91) form a stack (E), and wherein the stack (E) comprises a through-duct (111) extending from a first opening (84) provided in the first portion (83) of the power circuit (15) to a second opening (103) provided in the connector (91).

2. The brushless electric motor (1) according to the preceding claim, wherein at least one electrical connection between the electrical conduction device (17) and the power circuit (15) is arranged in the through-duct (111).

3. The brushless electric motor (1) according to the preceding claim, wherein the electrical connection is a weld between at least one end (42, 44, 46, 48) of at least one electrical cable (41, 42, 43, 45) of the electrical conduction device (17) and at least one electrically conductive track (61) of the power circuit (15).

4. The brushless electric motor (1) according to any one of claims 1 to 3, wherein the through-duct (111) is filled with at least one sealing element (131).

5. The brushless electric motor (1) according to any one of claims 1 to 4, wherein the first opening (84) is at least partially closed by a cover (121).

6. The brushless electric motor (1) according to the preceding claim, comprising a plurality of electrical connections between the electrical conduction device (17) and the power circuit (15), wherein the cover (121) comprises at least one partitioning element (123) of the through-duct (111) configured to isolate a plurality of electrical connections from one another.

7. The brushless electric motor (1) according to any one of claims 5 to 6, wherein the cover (121) is fastened to the connector (91) by at least one fastening element (127).

8. The brushless electric motor (1) according to any one of claims 1 to 7, wherein the second opening (103) is closed by a lid (133) which at least partially covers the connector (91).

9. A motor-fan unit (320) of a thermal management module (300) of a vehicle, comprising a propeller (330) and at least one brushless electric motor (1) according to any one of the preceding claims, the brushless electric motor (1) being connected to the propeller (330) by a shaft (5) and being configured to drive the propeller (330) in rotation.
